# EUROPÄISCHE PATENTSCHRIFT

(11) **EP 1 162 100 B1**
(45) Veröffentlichungstag und Bekanntmachung des Hinweises auf die Patenterteilung: **28.11.2007**
(21) Anmeldenummer: 01110805.7
(22) Anmeldetag: 04.05.2001
(51) Int. Cl.: B60K 15/077

(54) **Kraftstoffördereinheit**
Fuel feed device
Dispositif d'alimentation en carburant

(30) Priorität: 08.06.2000 DE 10027991
(43) Veröffentlichungstag der Anmeldung: 12.12.2001
(73) Patentinhaber: Kautex Textron GmbH & Co. KG., 53229 Bonn (DE)
(72) Erfinder: Walter, Rüdiger, 53123 Bonn (DE)
(74) Vertreter: Kierdorf, Theodor

(56) Entgegenhaltungen:
- EP-A- 0 922 603
- DE-A1- 19 912 642

## Beschreibung

Die Erfindung betrifft eine Kraftstoffördereinheit mit Einbauhalterung, die eine Verspannung der Anordnung gegen den Boden eines Tanks mittels Druckfedern oder flexiblen Dämpfungselementen oder dergleichen bewirkt und die wenigstens ein erstes Reservoir mit einer darin angeordneten Kraftstoffpumpe, gegebenenfalls einem Kraftstoffilter sowie einem Deckelverschluß für eine Montageöffnung in einem Kraftstofftank aufnimmt.

Eine derartige Kraftstoffördereinheit ist beispielsweise aus den Druckschriften EP 0 203 244, EP 0 297 256 sowie beispielsweise aus der DE 196 15 081 bekannt. Diese Kraftstoffördereinheiten sollen als zusammenhängende Baugruppe bestehend aus Reservoir bzw. Schwalltopf, Kraftstoffpumpe, Kraftstoffilter sowie Deckelverschluß für die Montageöffnung eines Kraftstofftanks ein- und ausbaubar sowie sicher auf dem Boden des Kraftstofftanks fixierbar sein. Einerseits soll der schnelle und sichere Austausch der gesamten Einheit im Reparatur- oder Wartungsfall gewährleistet sein, andererseits sollen solche Kraftstoffördereinheiten an etwaige Höhentoleranzen der verwendeten Kraftstofftanks anpaßbar sein. Hierzu ist verschiedentlich vorgeschlagen worden, die Kraftstoffördereinheit bzw. Brennstoffördereinheit so auszubilden, daß Höhentoleranzen durch eine axiale Verschiebbarkeit wenigstens der Kraftstofförderpumpe, vorzugsweise des Schwalltopfs mit der darin angeordneten Kraftstoffpumpe, bezüglich des Deckelverschlusses bzw. Deckelflansches auszugleichen. In der zuvor genannten EP 0 297 256 ist beispielsweise vorgesehen, daß die elektrische Kraftstoffpumpe über eine Teleskopführung axial verschiebbar mit der Druck- und Rücklaufleitung ausgebildet ist, wobei in der genannten Druckschrift zusätzlich Maßnahmen zur geräuschisolierten Lagerung der Kraftstoffpumpe vorgeschlagen werden.

Da bekanntlich moderne Kraftstofftanks oftmals sehr verzweigt sind und wenig Plateaufläche für Deckelverschlüsse, Deckelflansche oder dergleichen sowie auch nur begrenzt Einbauvolumen für eine Brennstoffördereinheit bieten, ist zwangsläufig eine wesentliche Anforderung an eine Kraftstoffördereinheit, daß diese möglichst kompakt baut. Andererseits muß aber sichergestellt werden, daß das zur Kraftstoffördereinheit gehörende Reservoir ein ausreichendes Kraftstoffvolumen für die Kraftstoffpumpe bereitstellt, so daß auch bei Kurvenfahrt oder Beschleunigungszuständen des Kraftfahrzeugs eine ordnungsgemäße Kraftstoffversorgung der Brennkraftmaschine sichergestellt ist. Schließlich dient oftmals das in dem Reservoir befindliche Kraftstoffvolumen als Reservevolumen, wobei bei vollständiger Tankentleerung entweder von einem oder mehreren Hauptfüllstandsgebern im Kraftstofftank auf einen in dem Reservoir vorgesehenen Reservefüllstandsgeber bzw. Nebenfüllstandsgeber umgeschaltet wird, um ausgehend von dem definierten Volumen des Reservoirs eine möglichst genaue Anzeige des Reservekraftstoffs zu erhalten. Die Forderung nach einem möglichst großen Volumen des Reservoirs, auch Schwalltopf oder Staugehäuse genannt, ist jedoch entgegengesetzt zu der Forderung, daß die Kraftstoffördereinheit möglichst kompakt und mit geringen Ausmaßen ausgebildet sein soll, um die Montageöffnung zum Einbringen der Kraftstoffördereinheit möglichst klein halten zu können. Diese Montageöffnung sollte auch wegen der hiermit verbundenen Dichtprobleme eine bestimmte Größe nicht überschreiten.

Dieses Problem ist beispielsweise bereits in der DE 32 25 929 angesprochen. Zu dessen Lösung wird dort vorgeschlagen, das Reservoir bzw. das Staugehäuse aus mehreren Teilen auszubilden, die miteinander in ihrer Einbaulage auf dem Tankboden verrastbar sind. Eines der Teile des Staugehäuses bildet dabei eine Halterung für ein nachträglich einzusetzendes Kraftstofförderaggregat, das zu dem unter einem Winkel zum Boden des Kraftstoffbehälters eingebaut werden soll, um die Einrichtung auch in einem Tank geringer Bauhöhe einsetzen zu können. Diese Ausbildung des Reservoirs ist jedoch nicht ohne weiteres bei einer Kraftstoffördereinheit der vorgenannten Art realisierbar, vielmehr erfordert diese eine Montage der Einzelteile des Reservoirs sowie des Kraftstofförderaggregats in einer bestimmten Reihenfolge.

Aus der DE 195 28 182 A1 ist eine Kraftstoffördereinheit mit einem Füllstandsgeber zum Einbau in einen Kraftstoffbehälter bekannt, bei der an einem Tankflansch eine ein Kraftstofförderaggregat aufnehmende Halterung längsverschiebbar und drehbeweglich angeordnet ist. Dadurch wird erreicht, daß ein unteres Ende der Halterung des Kraftstofförderaggregats schwenkbar an einem Boden des Kraftstoffbehälters oder eines Schwalltopfs zentrierbar ist, so daß Winkelabweichung des Flanschs und/oder des Bodens des Kraftstoffbehälters von der Sollage nicht auf die Meßgenauigkeit eines an der Kraftstoffördereinheit angeordneten Füllstandsgebers wirken. Dabei ist ein verhältnismäßig großes Reservoir vorgesehen, daß die Kraftstoffpumpe aufnimmt und mit einem in einem Filtergehäuse angeorndeten Kraftstoffilter über Federelemente dreh- und schwenkbar mit diesem eine Montageeinheit bildend angeordnet ist. Die Montage der Kraftstoffördereinheit folgt in einer Konfiguration, die etwa der Einbaulage entspricht. Diese Anordnung der Einzelteile zueinander erfordert ebenfalls eine verhältnismäßig große Montageöffnung im Tank, die, wie bereits vorstehend erwähnt, unerwünscht ist.

Aus der EP 0 922 603 A1 ist eine Anordnung zweier Kraftstoffreservoire zur Aufnahme in einem Kraftstofftank bekannt, die einseitig und bodenseitig flexibel miteinander verbunden sind, und zwar über flexible Laschen, die in einer Montagekonfiguration eine Abwinklung der Reservoire zueinander zulassen. Das zuerst in den Tank einzuführende Reservoir wird so gekippt in die Montageöffnung des Tanks eingesetzt, daß dessen obere Stirnseite zunächst quer zum Tankboden ausgerichtet ist. Zur Anordnung dieses Reservoirs in die Einbaulage ist es erforderlich, das Reservoir beim Einführen des zweiten Reservoirs bzw. des Hauptreservoirs in die Montageöffnung des Tanks im Tank um 90° zu drehen, wobei das Hauptreservoir in der Montageöffnung des Tanks verkantet werden muß. Die Einbringung dieser Anordnung in den Tank ist außerordentlich umständlich und zeitaufwendig. Auf Grund der Tatsache, dass das zuletzt in den Tank einzuführende Reservoir beim Verschwenken des zuerst in den Tank eingefügten Reservoirs verkantet werden muss, ist es letztendlich erforderlich, die lichte Weite der Montageöffnung entsprechend groß zu wählen, was, wie vorstehend bereits ausgeführt wurde, grundsätzlich nicht erwünscht ist.

Aus der EP 0 922 603 A1 ist eine Kraftstofffördereinheit gemäß dem Oberbegriff des Anspruchs 1 bekannt.

Der Erfindung liegt daher die Aufgabe zu Grunde, eine Kraftstofffördereinheit der genannten Art so weiterzubilden, dass eine vereinfachte Montage und Befestigung innerhalb des Kraftstofftanks gewährleistet ist.

Die Aufgabe wird dadurch gelöst, daß die Einbauhalterung eine Verspannung der Anordnung gegen den Boden des Tanks mittels Druckfedern oder flexibler Dämpfungselemente oder dergleichen bewirkt.

Unter Beibehaltung der axialen Ausrichtung im Sinne der Erfindung ist zu verstehen, dass die Grundausrichtung der Reservoire in deren Längserstreckung in der Montagekonfiguration bzw. beim Einführen in den Tank derjenigen der Einbaulage entsprechen soll. Durch eine derartige Ausbildung der Kraftstofffördereinheit ist es möglich, die einzelnen Baugruppen der Montageeinheit von einer Montagekonfiguration in eine Einbaukonfiguration und gegebenenfalls umgekehrt zueinander zu verstellen, d.h. zu verschwenken oder zu verschieben, so dass die Kraftstofffördereinheit in der Montagekonfiguration weniger Platz beansprucht als in der Einbaukonfiguration und diese durch eine verhältnismäßig kleine Montageöffnung im Kraftstofftank einsetzbar ist. In der Einbaulage der Kraftstoffördereinheit können deren Baugruppen zueinander in die Einbaukonfiguration verstellt werden, so daß die Verspannung bzw. Befestigung der Kraftstoffördereinheit auf dem Tankboden in dieser verhältnismäßig mehr Platz beanspruchenden Einbaukonfiguration erfolgen kann.

Vorzugsweise ist wenigstens ein Reservoir, vorzugsweise das erste Reservoir längsverschieblich an der Einbauhalterung oder an dem anderen Reservoir geführt, derart, daß dessen Abstand zu dem Deckelverschluß zu Montagezwecken variierbar ist. Die hierdurch erhaltene "Ausziehbarkeit" der gesamten Anordnung ermöglicht es, die zuerst in den Tank eingeführten Teile der Kraftstoffördereinheit im Tank bereits vor dem vollständigen Einführen der gesamten Anordnung in die Einbaulage zu verschieben.

Zweckmäßigerweise ist das zweite Reservoir innerhalb der projizierten Fläche des Deckelverschlusses angeordnet.

Als längsverschiebliche Führung eines Reservoirs können zwei verschieblich geführte Auszüge vorgesehen sein, deren Auszugslänge so bemessen ist, daß das zuerst in die Montageöffnung eingesetzte Reservoir unter Ausnutzung der lichten Weite der Montageöffnung im Tank etwa quer zu dessen Einführrichtung in seine Einbaulage verschiebbar ist. Es ist für den Fachmann selbstverständlich, daß anstelle von zwei Auszügen auch nur ein einziger Auszug vorgesehen sein kann.

Bei einer vorteilhaften Ausgestaltung der Kraftstoffördereinheit gemäß der Erfindung sind als Auszüge mit Endanschlägen versehene Führungsschienen vorgesehen, die einerseits von Gleitführungen des ersten Reservoirs und andererseits von Gleitführungen des zweiten Reservoirs oder von Gleitführungen der Einbauhalterung längsverschieblich und verdrehsicher aufgenommen werden. Hierdurch wird eine "Teleskopierbarkeit" der gesamten Anordnung erreicht, wobei die Endanschläge der Führungsschiene einerseits sicherstellen, daß diese unverlierbar in den Gleitführungen angeordnet sind, andererseits begrenzen diese die mögliche Auszugslänge und schließlich kann hierdurch der Andruck eines Reservoirs auf dem Tankboden über die Einbauhalterung und das betreffende andere Reservoir sichergestellt werden.

Zweckmäßigerweise sind die Führungsschienen als I-Profil-Schienen ausgebildet, und die Gleitführungen bilden C-Profil-Nuten aus, die die Gurte der I-Profil-Schienen formschlüssig umgreifen.

Das erste und das zweite Reservoir können jeweils bodenseitig nach dem Prinzip der kommunizierenden Röhren über flexible Leitungen miteinander verbunden sein, so daß die Befüllung der Reservoire mit jeweils gleichem Füllstand sichergestellt ist. Schließlich ist vorgesehen, daß nur in einem der Reservoire eine Kraftstofförderpumpe bzw. ein Kraftstofförderaggregat angeordnet ist, wobei durch die vorstehend beschriebene Verbindung auch sichergestellt ist, daß sich die Reservoire gleichzeitig und gleichmäßig entleeren.

Es wäre jedoch auch möglich, in jedem der Reservoire ein Kraftstofförderaggregat vorzusehen, die entweder beide den Kraftstoff zum Motor fördern oder von denen eines in das jeweils andere Reservoir fördert.

Nach einer besonders bevorzugten Ausführungsform der Kraftstoffördereinheit ist vorgesehen, daß die Verbindungsleitung der Reservoire im wesentlichen unter diesen verlaufend angeordnet ist, und zwar derart, daß diese im auseinandergezogenen Zustand, d. h. in deren Montagekonfiguration kaum oder überhaupt nicht aus der projizierten Fläche der Reservoire heraussteht. Hierdurch ist es möglich, den Durchmesser der Montageöffnung im Tank nur unwesentlich größer als den Durchmesser der Reservoire zu wählen, wobei dennoch eine problemlose Montage gewährleistet ist.

Besonders vorteilhaft ist es, wenn die Lage der Anschlüsse der Reservoire an die Verbindungsleitung zueinander so gewählt ist, daß bei Neigung des Tanks ein Kraftstoffablauf von demjenigen Reservoir, das die Kraftstoffpumpe beinhaltet unterbunden wird, jedoch ein Kraftstoffzulauf zu diesem Reservoir aus dem jeweils anderen Reservoir möglich ist.

Ebenfalls vorteilhaft ist es, wenn das Kraftstoffilter zwischen dem Deckelverschluß und einem Reservoir, vorzugsweise dem zweiten Reservoir, vorgesehen ist, wobei der über ein Druckregelventil abgegebene Rücklauf aus dem Kraftstoffilter in dieses Reservoir mündet. Hierdurch wird der zwischen dem Deckelverschluß und einem Reservoir vorgesehene Platz optimal ausgenutzt, das Kraftstoffilter bzw. das Kraftstoffiltergehäuse sowie eines der Reservoire sind so fluchtend zueinander angeordnet, wobei beispielsweise das an das Kraftstoffiltergehäuse angeschlossene Druckregelventil in der Einbaukonfiguration in eines der Reservoire zumindest teilweise eintauchen kann.

Zweckmäßigerweise wird das Kraftstoffilter von einem eine Baueinheit mit dem Deckelverschluß bildenden Filtergehäuse aufgenommen.

Die Einbauhalterung kann als teleskopierbares Gestänge ausgebildet sein, das eine Vorspannung der gesamten Anordnung auf dem Boden eines Tanks entgegen der Wirkung von hierfür vorgesehenen Druckfedern ermöglicht.

Es ist für den Fachmann ersichtlich, daß die Kraftstoffördereinheit im Rahmen der Erfindung auch so ausgebildet sein kann, daß die Reservoire zueinander schwenkbar an einer Einbauhalterung angeordnet sein können, wobei dann in der Montagekonfiguration der Deckelverschluß sowie beide Reservoire axial hintereinander und zueinander fluchtend angeordnet sind und in der Einbaukonfiguration eines der Reservoire, vorzugsweise das zuunterst angeordnete Reservoir, wenigstens bezüglich der Einbauhalterung verschwenkbar und axial verschiebbar ausgebildet ist. Die Verschwenkung des zuunterst angeordneten Reservoirs erfolgt dann über ein bei der Montage in die Halterung eingeleitetes Drehmoment, entweder mittels eines hierfür vorgesehenen Schlüssels oder über einen am Tankboden hierfür vorgesehenen Vorsprung als Widerlager zur Einleitung der Ausschwenkbewegung. Alternativ kann vorgesehen sein, daß die Bauteile zueinander in der Montagekonfiguration unter Federvorspannung zueinander fluchtend angeordnet sind, wobei die Verstellung in die Einbaukonfiguration durch Betätigung eines Entriegelungsmechanismus erfolgen kann, so daß sich die Bauteile aufgrund der Federkraft in die Einbaukonfiguration bewegen. Es für den Fachmann dabei selbstverständlich, daß zusätzlich Mittel vorgesehen sein müssen, um die Reservoire in der Einbaulage relativ zueinander zu fixieren. Anschließend kann das darüber angeordnete Reservoir sowie der Deckelverschluß gegebenenfalls mit einem Filtergehäuse durch Zusammenschieben der Anordnung in die Endlage gebracht werden.

Die Erfindung wird nachstehend anhand eines in den Zeichnungen dargestellten Ausführungsbeispiels erläutert.

Es zeigen:
- Fig. 1: eine schematische Ansicht der Kraftstoffördereinheit gemäß der Erfindung in Montagekonfiguration, teilweise in einen im Schnitt dargestellten Kraftstofftank eingesetzt,
- Fig. 2: eine Stirnseitenansicht der in Fig. 1 dargestellten Kraftstoffördereinheit in Montagekonfiguration,
- Fig. 3: die in Fig. 1 dargestellte Kraftstoffördereinheit in Montagekonfiguration, wobei bereits ein Reservoir der Kraftstoffördereinheit in seine Endlage im Tank verschoben ist,
- Fig. 4: die im Tank angeordnete Kraftstoffördereinheit in Einbaukonfiguration, jedoch nicht endgültig im Tank fixiert,
- Fig. 5: die fertig im Tank montierte und fixierte Kraftstoffördereinheit,
- Fig. 6: eine Draufsicht auf die Kraftstoffördereinheit,
- Fig. 7: eine Unteransicht der Kraftstoffördereinheit und

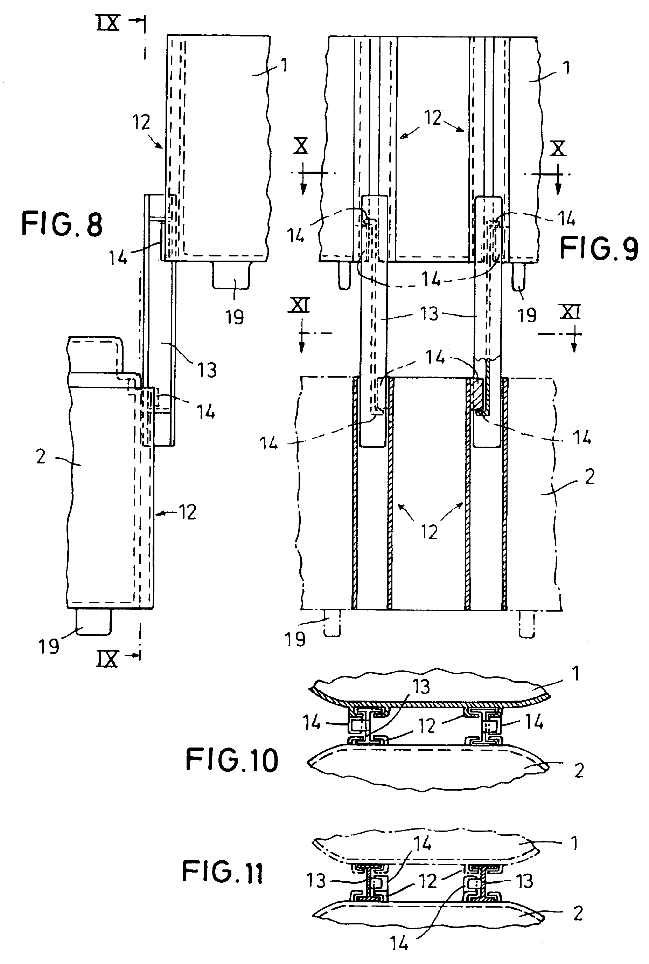

- Fig. 8: eine vergrößerte Seitenansicht der Gleitführung der Reservoire,
- Fig. 9: eine Ansicht entlang der Linien IX-IX in Fig. 8,
- Fig. 10: einen Schnitt entlang der Linien X-X in Fig. 9 und
- Fig. 11: einen Schnitt entlang der Linien XI-XI in Fig. 10.

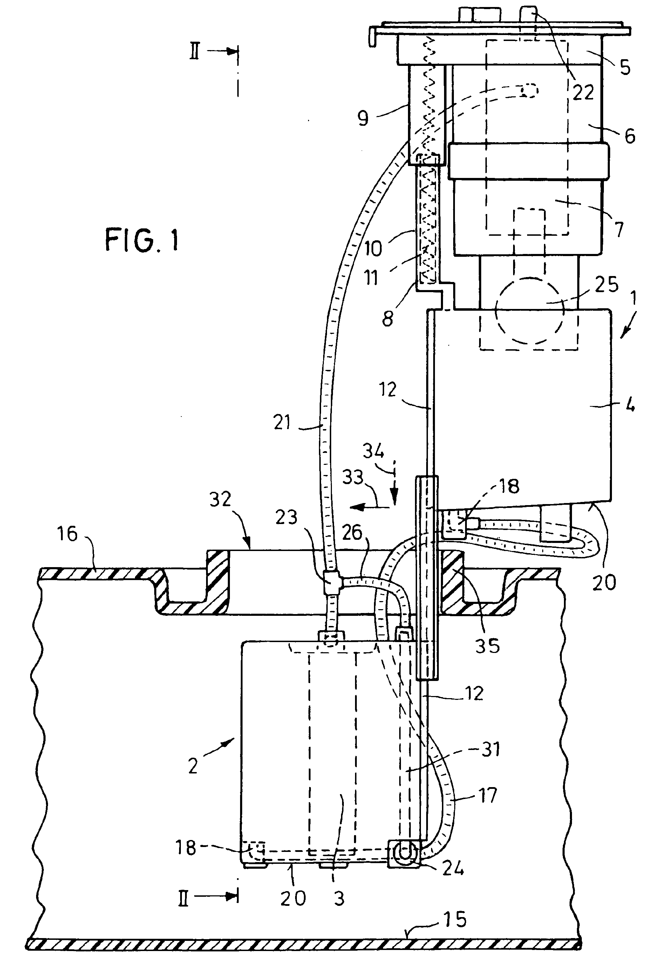

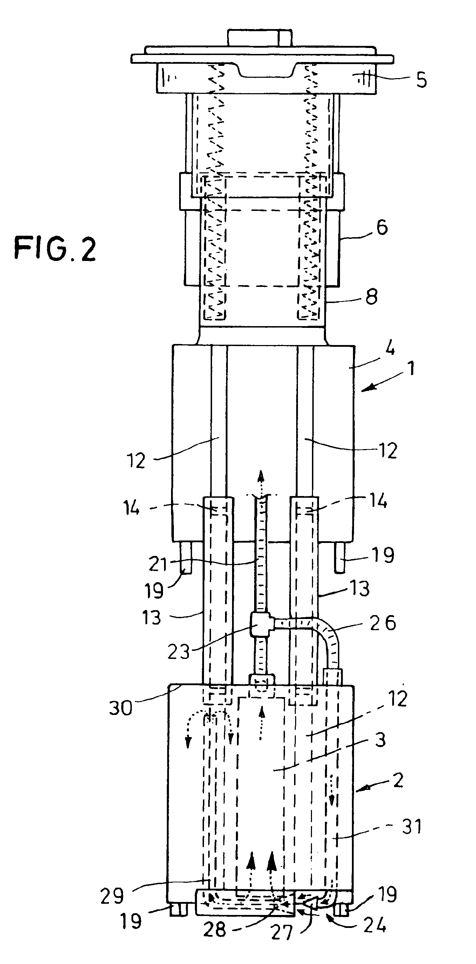

Wie insbesondere aus den Fig. 1 und 2 ersichtlich ist, umfaßt die Kraftstoffördereinheit 1 gemäß der Erfindung ein erstes Reservoir 2 mit einer daran angeordneten Kraftstoffpumpe 3, ein zweites Reservoir 4, einen Deckelverschluß 5 sowie ein auf der Unterseite des Deckelverschlusses 5 angeordnetes Kraftstoffiltergehäuses 6 mit einem darin angeordneten Kraftstoffilter 7. Der Deckelverschluß 5 und das zweite Reservoir 4 sind über eine Einbauhalterung 8 federnd teleskopierbar miteinander verbunden. Die Einbauhalterung besteht in dem dargestellten Ausführungsbeispiel aus zwei im Abstand voneinander an der Unterseite des Deckelverschlusses 5 vorgesehene rohrförmigen Aufnahmen 9, die zwei vorzugsweise mit dem zweiten Reservoir 4 einstückig verbundene Tauchrohre 10 aufnimmt, wobei die Tauchrohre 10 einen geringfügig kleineren Durchmesser als die Aufnahmen 9 aufweisen. Die Tauchrohre 10 sowie die Aufnahmen 9 sind gegeneinander durch diese durchsetzende Druckfedern 11 abgestützt, wobei der Auszug der Tauchrohre 10 aus den Aufnahmen 9 anschlagbegrenzt ist, was für den Fachmann eigentlich selbstverständlich ist.

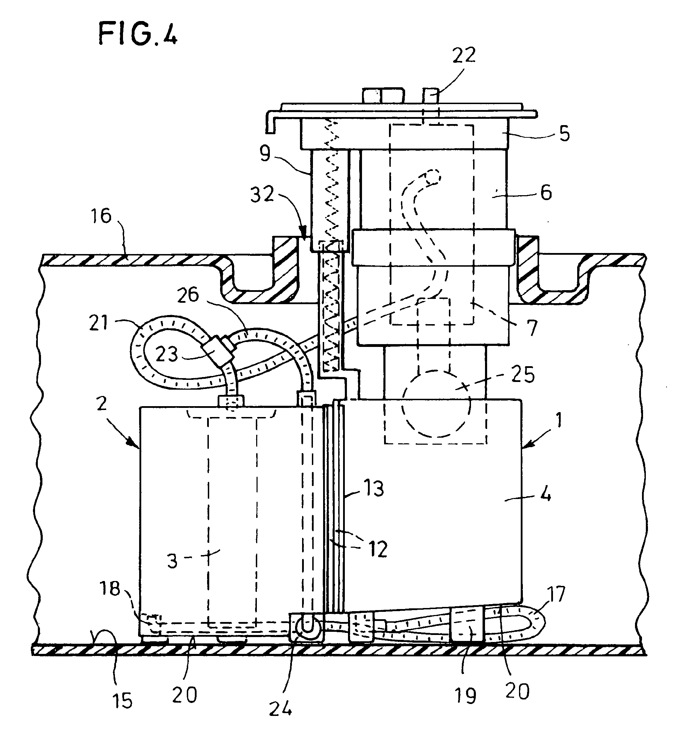

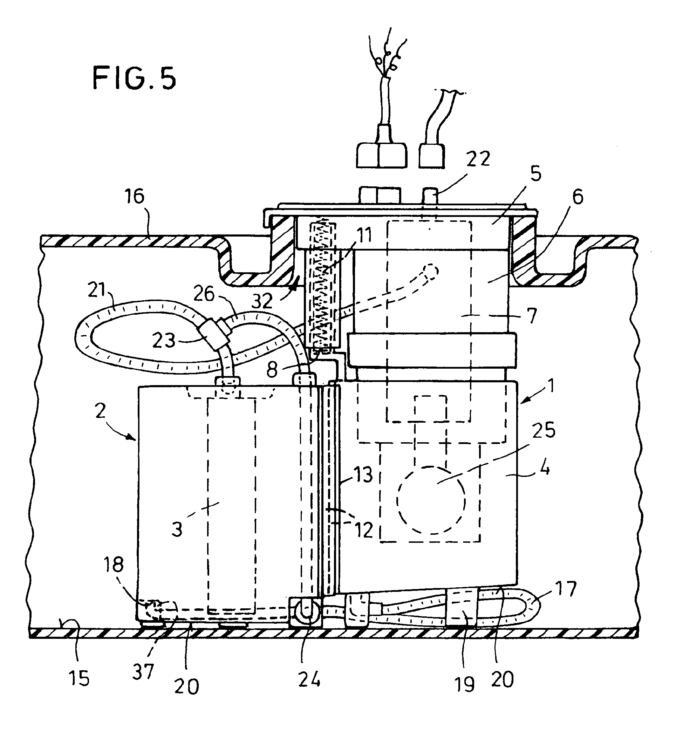

Aus der dem ersten Reservoir 2 zugekehrten Seite des zweiten Reservoirs 4 sind in diesem zwei Gleitführungen 12 in Form von C-Profil-Nuten vorgesehen, in denen verschieblich Auszüge 13 in Form von I-Profil-Schienen angeordnet sind. Auf der dem zweiten Reservoir 4 zugewandten Seite des ersten Reservoirs 2 bzw. an dessen Umfang sind ebenfalls Gleitführungen 12 in Form von C-Profil-Nuten vorgesehen, in denen die Auszüge 13 ebenfalls verschieblich angeordnet sind. Die Gleitführungen 12 umgreifen die Gurte der I-Profile der Auszüge 13 jeweils formschlüssig, wobei in den Gleitführungen 12 als auch beiderseits der Auszüge 13 jeweils Endanschläge 14 vorgesehen sind, die einerseits die Ausziehlänge der Auszüge 13 begrenzen, andererseits in der in den Fig. 4 und 5 dargestellten Einbaukonfiguration der Kraftstoffördereinheit 1 gewährleisten, daß das erste Reservoir 2 über die Druckfedern 11 der Einbauhalterung 8 gegen den Boden 15 des Tanks 16 angedrückt wird.

Bei der in dem Ausführungsbeispiel beschriebenen Variante der Kraftstoffördereinheit 1 sind die Reservoire 2, 4 über die Auszüge 13 unmittelbar miteinander verbunden, die Erfindung soll jedoch auch so zu verstehen sein, daß beispielsweise das zweite Reservoir 4 von der Einbauhalterung 8 untergriffen werden kann, wobei dann die Auszüge 13 in Gleitführungen 12 der Einbauhalterung 8 geführt wären.

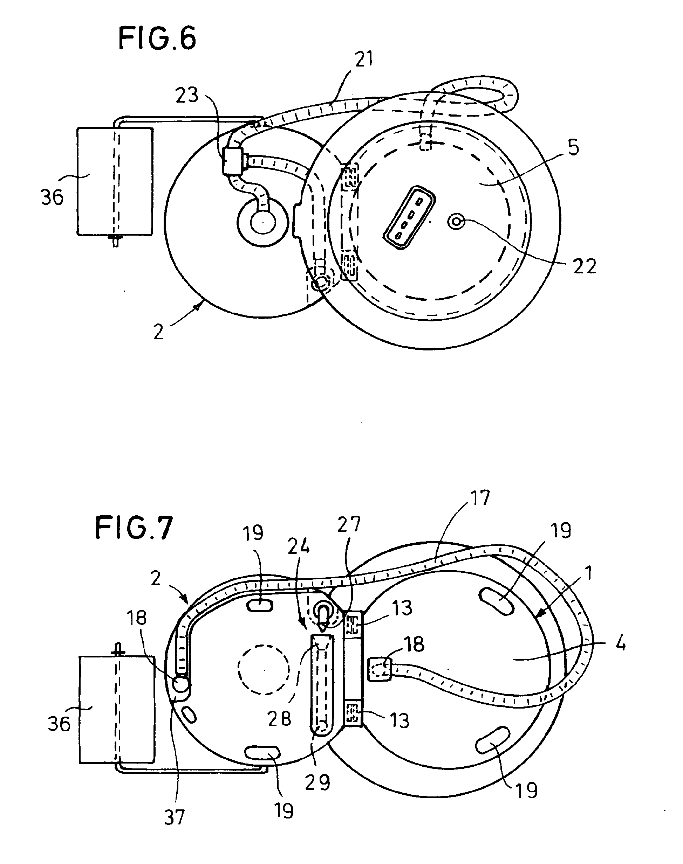

Die Reservoire 2 und 3 sind jeweils bodenseitig über eine Verbindungsleitung 17 aneinander angeschlossen, wobei die hierfür vorgesehenen Anschlußnippel 18 so zueinander angeordnet sind, daß bei Querneigung des Tanks 16 Kraftstoff von dem zweiten Reservoir 4 in das erste Reservoir 2 laufen kann, jedoch ein Kraftstoffabfluß von dem ersten Reservoir 2 in das zweite Reservoir 4 bei Querneigung und/oder Beschleunigung des Fahrzeugs, wenn der Füllstand in den Reservoiren 2, 4 niedrig ist, unterbunden wird. Wie dies insbesondere aus der in Fig. 7 gezeigten Unteransicht entnehmbar ist, wird dies dadurch bewirkt, daß der Anschlußnippel 18 des ersten Reservoirs 2 an diesem bodenseitig auf der dem zweiten Reservoir 4 abliegenden Seite angeordnet ist und der Anschlußnippel 18 des zweiten Reservoirs 4 an diesem bodenseitig auf der dem ersten Reservoir 2 zugewandten Seite angeordnet ist. Wie der Draufsicht und der Unteransicht auf die Kraftstoffördereinheit zu entnehmen ist, sind im übrigen die Reservoire 2, 4 sowie der Deckelverschluß 5 und das Kraftstoffiltergehäuse 6 im Querschnitt rund ausgebildet, was nicht zwingend erforderlich ist.

Weiterhin ist vorgesehen, daß die Verbindungsleitung 17, wie dies insbesondere der Unteransicht in Fig. 7 zu entnehmen ist, weitestgehend innerhalb der von den Reservoiren 2, 4 projizierten Fläche verlaufend angeordnet ist, wobei die Reservoire 2, 4 bodenseitig jeweils mit Füßen 19 versehen sind, die auf dem Boden 15 des Tanks in der Einbaulage aufstehen und den Abstand der Reservoirböden 20 zum Boden 15 des Tanks 16 definieren. Der Abstand des Bodens 20 des ersten Reservoirs 2 zum Boden 15 des Tanks 16 ist dabei deutlich geringer als der Abstand des Bodens 20 des zweiten Reservoirs 4 zum Boden 15 des Tanks 16. Der zwischen dem Boden 20 des zweiten Reservoirs 4 und dem Boden 15 des Tanks 16 gebildete Zwischenraum nimmt die Verbindungsleitung 17 in der Einbaulage der Kraftstofffördereinheit auf, und zwar derart, daß die Verbindungsleitung 17 unterhalb des Bodens 20 des zweiten Reservoirs 4 noch Bewegungsspielraum hat. Im Boden 20 des ersten Reservoirs 2 ist ein Absatz 37 vorgesehen, der über einen Teilumfang des Reservoirs eine Aussparung für einen Teilabschnitt der Verbindungsleitung 17 bildet, so daß der Anschlußnippel 18 gegenüber dem Boden 20 des ersten Reservoirs 2 erhöht angeordnet ist, so daß in jedem Falle sichergestellt ist, daß bei entsprechender Querneigung des Tanks 16 oder bei vergleichbaren Beschleunigungseinwirkungen auf den Tank 16 bei niedrigem Füllstand in den Reservoiren 2 und 4 Kraftstoff nicht von dem ersten Reservoir 2 in das zweite Reservoir 4 zurücklaufen kann. Schließlich ist zur Erleichterung des Kraftstoffflusses von dem zweiten Reservoir 4 in das erste Reservoir 2 der Boden 20 des zweiten Reservoirs 4 in Richtung auf das erste Reservoir geneigt ausgebildet.

Zur Funktionsweise der Kraftstoffördereinheit 1 im Betrieb sei angemerkt, daß die mit 3 bezeichnete Kraftstoffpumpe, die in dem ersten Reservoir 2 angeordnet ist, über eine Förderleitung 21 in das Kraftstoffiltergehäuse 6 fördert, wo der Kraftstoff das dort angeordnete Kraftstoffilter 7 durchfließt und über einen Druckstutzen 22 an eine nicht dargestellte Kraftstoffzufuhr zum Motor eines Kfz geführt wird. Das Kraftstoffilter 7 ist als für sich genommen bekannte Filterpatrone ausgebildet, auf deren Ausgestaltung hier nicht näher eingegangen wird. Die Kraftstoffpumpe 3 fördert jedenfalls einen größeren Volumenstrom als dieser vom Motor des Kfz gefordert wird, wobei ein Teilvolumenstrom über eine Abzweigung 23 der mit 24 bezeichneten Saugstrahlpumpe zugeführt wird und ein weiterer Teilvolumenstrom über ein Druckregelventil 25 in das zweite Reservoir 4 abgegeben wird. Das Druckregelventil 25 ist unmittelbar an die Unterseite des Kraftstoffiltergehäuses 6 angeschlossen und taucht in der Einbaukonfiguration der Kraftstoffördereinheit wenigstens teilweise in das zweite Reservoir 4 ein, in welches das Druckregelventil 25 unmittelbar öffnet.

An die Abzweigung 23 der Förderleitung 21 ist eine mit 26 bezeichnete Leitung angeschlossen, die zur Saugstrahlpumpe 24 führt. Über den von dem Hauptförderstrom des Kraftstoffs zu der Saugstrahlpumpe 24 abgezweigten Teilstrom des Kraftstoffs wird in der Saugstrahlpumpe 24 ein Treibstrahl erzeugt, der wiederum in dem im Tank 16 befindlichen Kraftstoff auf an sich bekannte Art und Weise einen Saugstrahl induziert.

Wie dies insbesondere aus der Zusammenschau der Fig. 1 und 2 ersichtlich ist, ist die Treibdüse 27 der Saugstrahlpumpe 24 unmittelbar unter dem Boden 20 des ersten Reservoirs angeordnet und auf eine ebenfalls dort vorgesehene, der Treibdüse 27 gegenüberliegend angeordnete Fangdüse 28 ausgerichtet. Die Fangdüse mündet in eine Steigleitung 29, die von unterhalb des Bodens 20 bis kurz unterhalb des oberen Randes 30 des ersten Reservoirs geführt ist und dort endet, so daß während des Betriebs und insbesondere bei Stillstand der Pumpe dauerhaft sichergestellt ist, daß die Reservoire 2, 4 vollständig gefüllt sind.

Aus Platzgründen ist die Leitung 26 an einen das erste Reservoir im wesentlichen vertikal durchsetzenden Kanal 31 angeschlossen, an dessen unterem Ende die Treibdüse 27 angeschlossen ist. Es versteht sich von selbst, daß die Treibdüse 27 an der tiefsten Stelle im Tank 16 angeordnet ist.

Nachstehend soll nun auf den Einbau der Kraftstoffördereinheit 1 eingegangen werden.

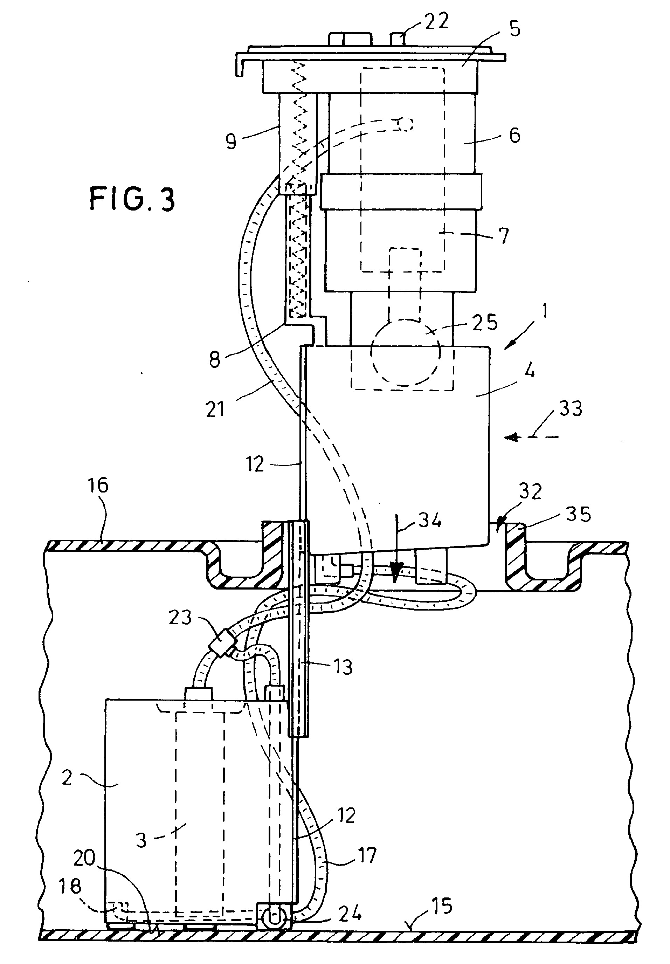

In Fig. 1 ist die Kraftstoffördereinheit 1 in der Montagekonfiguration dargestellt, d. h. im ausgezogenen Zustand. Das erste Reservoir 2 ist in bezug auf das zweite Reservoir 4 axial verschoben, und zwar um die maximale Auszugslänge der als Schienen ausgebildeten Auszüge 13. Die Förderleitung 21 sowie die Verbindungsleitung 17 sind hierzu in gestreckte bzw. nahezu gestreckte Lage ausgezogen. Das erste Reservoir 2 ist bereits durch die Montageöffnung 32 des Tanks 16 in diesen eingeführt. Aus Fig. 1 ist ohne weiteres ersichtlich, daß die Länge der Auszüge 13 so bemessen ist, daß es in der dargestellten Lage möglich ist, die gesamte Kraftstoffördereinheit innerhalb der Montageöffnung 32, deren lichte Weite ausnutzend, in Richtung des Pfeils 33 verschiebbar ist, und zwar so daß der Boden 20 des zweiten Reservoirs 4 sowie der darunter befindliche Anschlußnippel 18 und die Füße 19 nicht gegen den Kragen 35 der Montageöffnung 32 anschlagen. Auf diese Art und Weise ist die Kraftstoffördereinheit 1 unter gleichzeitiger Absenkung in Richtung des Pfeils 34 in die in Fig. 3 dargestellte Lage versetzbar. In dieser Lage steht das erste Reservoir mit seinen Füßen 19 auf dem Boden 15 des Tanks 16 auf. Nun läßt sich die gesamte Anordnung zusammenschieben, wobei das zweite Reservoir mit dem darüber angeordneten Kraftstoffiltergehäuse 6 und dem Deckelverschluß 5 in die Montageöffnung 32 einführbar sind. Es ist selbstverständlich, daß hierzu das Kraftstoffiltergehäuse 6 und das zweite Reservoir 4 unterhalb der projizierten Fläche des Deckelverschlusses 5 angeordnet sein müssen. Die Kraftstoffördereinheit wird nun zusammengeschoben, wobei die Auszüge 13 in beiden Reservoiren 2 und 4 vollständig in die dort vorgesehenen Gleitführungen 12 eintauchen, bis die Kraftstoffördereinheit die in Fig. 4 dargestellte Lage eingenommen hat, wobei die Füße 19 des zweiten Reservoirs 4 auf dem Boden 15 des Tanks 16 aufstehen. In dieser Lage kommen die beiderseits der Auszüge 13 und der Gleitführungen 12 vorgesehenen Endanschläge zur Wirkung. Der obere Endanschlag 14 wirkt mit den Gleitführungen 12 des zweiten Reservoirs 4 zusammen, der jeweils untere Endanschlag 14 der Auszüge 13 wirkt mit den Gleitführungen 12 des ersten Reservoirs 2 zusammen, und zwar derart, daß bei weiterem Zusammenschieben der Kraftstoffördereinheit in die gegen den Boden 15 des Tanks 16 verspannte Lage, wie dies in Fig. 5 dargestellt ist, die Druckfedern 11 der Einbauhalterung 8 über das zweite Reservoir 4 auf das erste Reservoir 2 wirken, so daß auch letztere sicher gegen den Boden 15 des Tanks 16 verspannt ist und Vertikalverschiebungen desselben ausgeschlossen sind.

Mit 36 ist schließlich ein Füllstandsgeber bezeichnet, der mit dem ersten Reservoir 2 verbunden ist und auf in diesem angeordnete Schaltelemente einwirkt.

### Bezugszeichenliste

- 1: Kraftstoffördereinheit
- 2: erstes Reservoir
- 3: Kraftstoffpumpe
- 4: zweites Reservoir
- 5: Deckelverschluß
- 6: Kraftstoffiltergehäuse
- 7: Kraftstoffilter
- 8: Einbauhalterung
- 9: Aufnahme
- 10: Tauchrohre
- 11: Druckfedern
- 12: Gleitführungen
- 13: Auszüge
- 14: Endanschläge
- 15: Boden
- 16: Tank
- 17: Verbindungsleitung
- 18: Anschlußnippel
- 19: Füße
- 20: Reservoirböden
- 21: Förderleitung
- 22: Druckstutzen
- 23: Abzweigung
- 24: Saugstrahlpumpe
- 25: Druckregelventil
- 26: Leitung
- 27: Treibdüse
- 28: Fangdüse
- 29: Steigleitung
- 30: oberer Rand
- 31: Kanal
- 32: Montageöffnung
- 33: Pfeil
- 34: Pfeil
- 35: Kragen
- 36: Füllstandsgeber
- 37: Absatz

## Patentansprüche

1. Kraftstofffördereinheit, wenigstens umfassend ein erstes Reservoir mit einer darin angeordneten Kraftstoffpumpe, ein zweites Reservoir (4), das in Einbaulage neben dem ersten Reservoir (2) angeordnet ist und mit diesem kommuniziert, und einen Deckelverschluss für eine Montageöffnung in einem Kraftstofftank, wobei das erste und das zweite Reservoir (2,4) wenigstens von einer Montagekonfiguration zu einer Einbaukonfiguration relativ zueinander axial verschiebbar und/oder verschwenkbar unter Beibehaltung der axialen Ausrichtung von einer Einbauhalterung (8), aufgenommen werden, wobei wenigstens ein Reservoir (2,4) wenigstens in der Einbaukonfiguration wenigstens teilweise außerhalb der projizierten Fläche des Deckelverschlusses (5) im Tank angeordnet ist, **dadurch gekennzeichnet, dass** die Einbauhalterung eine Verspannung der Anordnung gegen den Boden des Tanks mittels Druckfedern oder flexibler Dämpfungselemente oder dergleichen bewirkt.

2. Kraftstofffördereinheit nach Anspruch 1, **dadurch gekennzeichnet, dass** ein Reservoir (2,4), vorzugsweise das erste Reservoir (2), längsverschieblich an der Einbauhalterung (8) oder an dem anderen Reservoir (2,4) geführt ist, derart, dass dessen Abstand zu dem Deckelverschluss (5) zu Montagezwecken variierbar ist.

3. Kraftstofffördereinheit nach einem der Ansprüche 1 oder 2, **dadurch gekennzeichnet, dass** das zweite Reservoir (4) innerhalb der projizierten Fläche des Deckelverschlusses (5) angeordnet ist.

4. Kraftstoffeinheit nach einem der Ansprüche 1 bis 3, **dadurch gekennzeichnet, dass** als längsverschiebliche Führung eines Reservoirs (2, 4) wenigstens ein, vorzugsweise zwei verschieblich geführte Auszüge (13) vorgesehen sind, deren Auszugslänge so bemessen ist, daß das zuerst in die Montageöffnung (32) eingesetzte Reservoir (2, 4) unter Ausnutzung der lichten Weite der Montageöffnung (32) im Tank etwa quer zur Einführrichtung in seiner Einbaulage verschiebbar ist.

5. Kraftstoffördereinheit nach einem der Ansprüche 1 bis 4, **dadurch gekennzeichnet, daß** als Auszüge (13) mit Endanschlägen versehene Führungsschienen vorgesehen sind, die einerseits von Gleitführungen (12) des ersten Reservoirs (2) und andererseits von Gleitführungen (12) des zweiten Reservoirs (4) oder von Gleitführungen (12) der Einbauhalterung (8) längsverschieblich und verdrehsicher aufgenommen werden.

6. Kraftstoffördereinheit nach einem der Ansprüche 1 bis 5, **dadurch gekennzeichnet, daß** die Führungsschienen als I-Profil-Schienen ausgebildet sind, und daß die Gleitführungen (12) als C-Profil-Nuten ausgebildet sind, die die Gurte der I-Profil-Schienen formschlüssig umgreifen.

7. Kraftstoffördereinheit nach einem der Ansprüche 1 bis 6, **dadurch gekennzeichnet, daß** das erste und das zweite Reservoir (2, 4) jeweils bodenseitig nach dem Prinzip der kommunizierenden Röhren über eine flexible Leitung miteinander verbunden sind.

8. Kraftstoffördereinheit nach einem der Ansprüche 1 bis 7, **dadurch gekennzeichnet, daß** die Verbindungsleitung (17) der Reservoire (2, 4) im wesentlichen unter diesen verlaufend angeordnet ist, und zwar derart, daß diese im auseinandergezogenen Zustand, d. h. in deren Montagekonfiguration kaum oder überhaupt nicht aus deren projizierter Fläche heraussteht.

9. Kraftstoffördereinheit nach einem der Ansprüche 1 bis 8, **dadurch gekennzeichnet, daß** die Lage der Anschlüsse der Reservoire (2, 4) an die Verbindungsleitung (17) zueinander so gewählt ist, daß bei Neigung des Tanks (16) und niedrigem Füllstand in den Reservoiren (2, 4) ein Kraftstoffablauf von demjenigen Reservoir (2, 4), das die Kraftstoffpumpe (3) beinhaltet, unterbunden wird, jedoch ein Kraftstoffzulauf zu diesem Reservoir (2, 4) aus dem jeweils anderen Reservoir (2, 4) möglich ist.

10. Kraftstoffördereinheit nach einem der Ansprüche 1 bis 9, **dadurch gekennzeichnet, daß** der Anschluß des ersten Reservoirs (2) an die Verbindungsleitung (17) an diesem bodenseitig auf der dem zweiten Reservoir (4) abliegenden Seite angeordnet ist und daß der Anschluß des zweiten Reservoirs (4) an die Verbindungsleitung (17) an diesem bodenseitig auf der dem ersten Reservoir (2) zugewandten Seite angeordnet ist.

11. Kraftstoffördereinheit nach einem der Ansprüche 1 bis 10, **dadurch gekennzeichnet, daß** ein Kraftstoffilter (7) zwischen dem Deckelverschluß (5) und einem Reservoir (2, 4), vorzugsweise dem zweiten Reservoir (4), vorgesehen ist.

12. Kraftstoffördereinheit nach einem der Ansprüche 1 bis 11, **dadurch gekennzeichnet, daß** ein Druckregelventil (25) vorgesehen ist, dessen Rücklauf aus dem Kraftstoffilter (7) in das unterhalb des Deckelverschlusses (5) angeordnete Reservoir (2, 4) mündet.

13. Kraftstoffördereinheit nach einem der Ansprüche 1 bis 12, **dadurch gekennzeichnet, daß** das Kraftstoffilter von einem eine Baueinheit mit dem Deckelverschluß (5) bildenden Filtergehäuse (6) aufgenommen wird.

14. Kraftstoffördereinheit nach einem der Ansprüche 1 bis 13, **dadurch gekennzeichnet, daß** die Einbauhalterung (8) als teleskopierbares Gestänge ausgebildet ist, das eine Verspannung der gesamten Anordnung auf dem Boden (15) eines Tanks (16) entgegen der Wirkung von hierfür vorgesehenen Druckfedern (11) ermöglicht.

## Claims

1. Fuel delivery unit comprising at least a first reservoir with a fuel pump arranged therein, a second reservoir (4) which, in the installation position, is arranged next to the first reservoir (2) and communicates therewith, and a cover seal for a fitting opening in a fuel tank, the first and second reservoir (2, 4) being received axially displaceably and/or pivotably relative to one another at least between a fitting configuration and an installation configuration while retaining the axial orientation of an installation support (8), at least a reservoir (2, 4) being arranged, in the installation configuration, in the tank at least partly outside the projected area of the cover seal (5), **characterised in that** the installation support braces the arrangement against the base of the tank by means of compression springs or flexible damping elements or the like.

2. Fuel delivery unit according to claim 1, **characterised in that** a reservoir (2, 4), preferably the first reservoir (2), is guided longitudinally displaceably on the installation support (8) or on the other reservoir (2, 4) in such a way that the distance from said reservoir to the cover seal (5) is variable for fitting purposes.

3. Fuel delivery unit according to either claim 1 or claim 2, **characterised in that** the second reservoir (4) is arranged inside the projected area of the cover seal (5).

4. Fuel delivery unit according to any one of claims 1 to 3, **characterised in that** at least one, preferably two, displaceably guided extensions (13) are provided as the longitudinally displaceable guide of a reservoir (2, 4), the extension length of which is such that the reservoir (2, 4) which is inserted first into the fitting opening (32) is displaceable in the tank substantially transversely to the direction of introduction in its installation position, by making use of the inner width of the fitting opening (32).

5. Fuel delivery unit according to any one of claims 1 to 4, **characterised in that** guide rails provided with end stops are provided as extensions (13), which rails are received longitudinally displaceably and in a non-rotational manner by sliding guides (12) of the first reservoir (2) on the one hand and by sliding guides (12) of the second reservoir (4) or by sliding guides (12) of the installation support (8) on the other hand.

6. Fuel delivery unit according to any one of claims 1 to 5, **characterised in that** the guide rails comprise I-profile rails and **in that** the sliding guides (12) are in the shape of C-profile grooves which positively encompass the flanges of the I-profile rails.

7. Fuel delivery unit according to any one of claims 1 to 6, **characterised in that** the first and second reservoir (2, 4) are connected to each other at their respective bases by a flexible conduit according to the principle of communicating tubes.

8. Fuel delivery unit according to any one of claims 1 to 7, **characterised in that** the connecting conduit (17) of the reservoirs (2, 4) is arranged to extend substantially below said reservoirs and also in such a way that when the reservoirs are moved away from each other, i.e. in the fitting configuration thereof, said conduit projects scarcely or not at all from the projected areas of the reservoirs.

9. Fuel delivery unit according to any one of claims 1 to 8, **characterised in that** the positions of the connections of the reservoirs (2, 4) to the connecting conduit (17) is selected relative to one another in such a way that upon inclination of the tank (16) and with a low fuel level in the reservoirs (2, 4) a discharge of fuel from the reservoir (2, 4) which contains the fuel pump (3) is prevented but an inflow of fuel to said reservoir (2, 4) from the respective other reservoir (2, 4) is possible.

10. Fuel delivery unit according to any one of claims 1 to 9, **characterised in that** the connection of the first reservoir (2) to the connecting conduit (17) is arranged at the base of said reservoir on the side remote from the second reservoir (4) and **in that** the connection of the second reservoir (4) to the connecting conduit (17) is arranged at the base of said reservoir on the side facing the first reservoir (2).

11. Fuel delivery unit according to any one of claims 1 to 10, **characterised in that** a fuel filter (7) is provided between the cover seal (5) and a reservoir (2, 4), preferably the second reservoir (4).

12. Fuel delivery unit according to any one of claims 1 to 11, **characterised in that** a pressure-regulating valve (25) is provided, the return of which flows from the fuel filter (7) into the reservoir (2, 4) arranged beneath the cover seal (5).

13. Fuel delivery unit according to any one of claims 1 to 12, **characterised in that** the fuel filter is received by a filter housing (6) which forms a constructional unit with the cover seal (5).

14. Fuel delivery unit according to any one of claims 1 to 13, **characterised in that** the installation support (8) is configured as a telescopic assembly which permits bracing of the entire arrangement on the base (15) of a tank (16) against the action of compression springs (11) provided therefor.

## Revendications

1. Dispositif d'alimentation en carburant comprenant au moins un premier réservoir muni d'une pompe à carburant disposée à l'intérieur, un second réservoir (4), qui est disposé dans la position d'intégration près du premier réservoir (2) et qui communique avec celui-ci, et une fermeture de couvercle pour une ouverture de montage située dans un réservoir de carburant de véhicule, le premier et le second réservoir (2, 4) étant logés de façon à pouvoir pivoter et/ou coulisser axialement l'un par rapport à l'autre au moins d'une configuration de montage vers une configuration d'intégration, en préservant l'orientation axiale d'un support d'intégration (8), au moins un réservoir (2, 4) étant placé, au moins dans la configuration d'intégration, au moins partiellement à l'extérieur de la surface projetée de la fermeture de couvercle (5) située dans le réservoir du véhicule, **caractérisé en ce que** le support d'intégration effectue un haubanage de l'agencement contre le fond du réservoir du véhicule au moyen de ressorts de pression ou d'éléments flexibles d'amortissement ou de pièces similaires.

2. Dispositif d'alimentation en carburant selon la revendication 1, **caractérisée en ce qu'**un réservoir (2, 4), de préférence le premier réservoir (2), est conduit de manière à coulisser longitudinalement sur le support d'intégration (8) ou sur le réservoir (2, 4), de façon à ce que sa distance par rapport à la fermeture de couvercle (5) puisse varier pour des raisons de montage.

3. Dispositif d'alimentation en carburant selon l'une quelconque des revendications 1 ou 2, **caractérisé en ce que** le second réservoir (4) est placé à l'intérieur de la surface projetée de la fermeture de couvercle (5).

4. Dispositif d'alimentation en carburant selon l'une quelconque des revendications 1 à 3, **caractérisé en ce que** sont prévues en tant que guidage coulissant longitudinalement d'un réservoir (2, 4), au moins une, de préférence deux rallonges (13) coulissantes, dont la longueur de rallonge est dimensionnée de façon à ce que le réservoir (2,4) introduit d'abord dans l'ouverture de montage (32) puisse coulisser dans sa position d'intégration, en utilisant la largeur intérieure de l'ouverture de montage (32) située dans le réservoir du véhicule, à peu près à l'oblique de la direction d'introduction.

5. Dispositif d'alimentation en carburant selon l'une quelconque des revendications 1 à 4, **caractérisé en ce que** sont prévus en tant que rallonges (13) des rails de guidage munis de butées finales, qui sont logés de manière à coulisser longitudinalement et sans rotation, d'une part par des guidages à glissement (12) du premier réservoir (2) et d'autre part par des guidages à glissement (12) du second réservoir (4) ou des guidages à glissement (12) du support d'intégration (8).

6. Dispositif d'alimentation en carburant selon l'une quelconque des revendications 1 à 5, **caractérisé en ce que** les rails de guidage sont conçus comme rails profilés en I, et **en ce que** les guidages à glissement (12) sont conçus comme des rainures profilées en C, qui entourent la ceinture des rails profilés en I par concordance de forme.

7. Dispositif d'alimentation en carburant selon l'une quelconque des revendications 1 à 6, **caractérisé en ce que** le premier et le second réservoir (2, 4) sont reliés l'un à l'autre respectivement, côté fond, selon le principe des tubes communicants par l'intermédiaire d'une conduite flexible.

8. Dispositif d'alimentation en carburant selon l'une quelconque des revendications 1 à 7, **caractérisé en ce que** la conduite de liaison (17) des réservoirs (2, 4) est placée de manière à passer essentiellement sous ceux-ci, et ce de façon à ce que celle-ci, à l'état étiré, c'est-à-dire dans sa configuration de montage, dépasse à peine ou pas du tout de sa surface projetée.

9. Dispositif d'alimentation en carburant selon l'une quelconque des revendications 1 à 8, **caractérisé en ce que** la position des raccords des réservoirs (2, 4) à la conduite de liaison (17) les uns par rapport aux autres est choisie de façon à ce qu'en cas d'une inclinaison du réservoir du véhicule (16) et d'un niveau de remplissage bas dans les réservoirs (2, 4), un écoulement de carburant hors du réservoir (2, 4) contenant la pompe à carburant (3) est évité, mais qu'un écoulement du carburant vers ce réservoir (2, 4) à partir de l'autre réservoir (2, 4) est possible.

10. Dispositif d'alimentation en carburant selon l'une quelconque des revendications 1 à 9, **caractérisé en ce que** le raccord du premier réservoir (2) à la conduite de liaison (17) est placé sur celui-ci coté fond sur la face détournée du second réservoir (4) et **en ce que** le raccord du second réservoir (4) à la conduite de liaison (17) est placé sur celui-ci côté fond sur la face tournée vers le premier réservoir (2).

11. Dispositif d'alimentation en carburant selon l'une quelconque des revendications 1 à 10, **caractérisé en ce qu'**un filtre à carburant (7) est prévu entre la fermeture de couvercle (5) et un réservoir (2, 4), de préférence le second réservoir (4).

12. Dispositif d'alimentation en carburant selon l'une quelconque des revendications 1 à 11, **caractérisé en ce qu'**est prévue une vanne de régulation de pression (25), dont le retour hors du filtre à carburant (7) débouche dans le réservoir (2, 4) placé sous la fermeture de couvercle (5).

13. Dispositif d'alimentation en carburant selon l'une quelconque des revendications 1 à 12, **caractérisé en ce que** le filtre à carburant est logé par un corps de filtre (6) constituant une unité de construction avec la fermeture de couvercle (5).

14. Dispositif d'alimentation en carburant selon l'une quelconque des revendications 1 à 13, **caractérisé en ce que** le support d'intégration (8) est conçu comme une tige télescopique, qui permet un haubanage de tout l'agencement au fond (15) d'un réservoir de véhicule (16) contre l'action de ressorts de pression (11) prévus à cet effet.
